# FASCICULE DE BREVET EUROPEEN

(11) **EP 1 524 798 B1**
(45) Date de publication et mention de la délivrance du brevet: **27.02.2008**
(21) Numéro de dépôt: 03292584.4
(22) Date de dépôt: 17.10.2003
(51) Int. Cl.: H04L 12/28

(54) **Réseau de communications sans fil à gestion d'allocation d'une portion de bande passante reservée à la transmission de requêtes prioritaires d'établissement de liaison**
Drahtloses Netzwerk für die Leitung von der Zuweisung von einem Frequenzband dass zur Übertragung von Prioritätenbitten von einer Verbindungseinrichtung reserviert wurde
Wireless network for the management of the allocation of a frequency band reserved to the transmission of priority requests of link establishment

(43) Date de publication de la demande: 20.04.2005
(73) Titulaire: Alcatel Lucent, 75008 Paris (FR)
(72) Inventeur: Pinault, Francis, 92270 Bois-Colombes (FR)
(74) Mandataire: Korakis-Ménager, Sophie

(56) Documents cités:
- EP-A- 1 349 321
- WO-A-02/07388

## Description

L'invention concerne le domaine des réseaux de communications sans fil, et plus particulièrement la gestion, au sein de tels réseaux, de l'allocation de bande passante pour la transmission de requêtes d'établissement de communication.

Comme le sait l'homme de l'art, certains réseaux de communications sans fil comportent un point d'accès couplé à un serveur d'appels raccordé à au moins un autre réseau de communications. Cela permet en effet à des terminaux de communication sans fil, qui sont adaptés à cet effet et qui sont raccordés à leurs points d'accès, d'établir des liaisons avec les réseaux distants.

Plus précisément, lorsqu'un terminal de communication sans fil souhaite établir une liaison avec un réseau distant, via un réseau sans fil traditionnel, il doit tout d'abord transmettre au serveur d'appels une requête d'établissement de liaison afin que lui soit allouée la bande passante nécessaire à l'établissement d'une liaison montante (ou « uplink »). Or, il arrive fréquemment qu'il ne reste plus suffisamment de bande passante disponible pour la transmission d'une requête d'établissement de liaison. Par conséquent, dans un réseau sans fil traditionnel, tant que la bande passante demeure saturée, aucune requête d'établissement de liaison ne peut être transmise, même si la liaison revêt un caractère prioritaire du fait qu'elle est liée, par exemple, à un service de sécurité ou à un service gouvernemental.

Certes, il existe des réseaux cellulaires réservés spécifiquement aux appels prioritaires, comme par exemple les réseaux TETRA et TETRAPOL, mais ceux-ci sont particulièrement onéreux et requièrent des terminaux de communication spécifiques, et non des terminaux de communication classiques tels que des téléphones mobiles de type GSM, GSM/GPRS ou UMTS. De plus, la couverture radio offerte par ces réseaux dédiés ne permet pas l'établissement de liaisons dans les bâtiments.

Le document EP 1 349 321 divulgue une station de base sans fil, laquelle contient une liste de priorités et un circuit qui détermine la priorité des données transmises à partir d'un terminal sans fil. Le serveur principal stocke les listes de priorités de tous les stations de base sans fil et avec un circuit de commande détermine la priorité des données à transmettre entre les terminaux sans fil.

L'invention a donc pour but d'améliorer la situation, de manière à faciliter la transmission des requêtes d'établissement de liaison à caractère(s) prioritaire(s), le plus fréquemment possible.

Elle propose à cet effet un réseau de communications sans fil comprenant au moins un point d'accès couplé à un serveur d'appels raccordé à au moins un réseau de communications distant, comme par exemple un réseau public de téléphonie et/ou un réseau public de données à protocole internet (IP).

Ce réseau de communications sans fil se caractérise par le fait qu'il comprend :
- des moyens de réservation chargés de réserver une portion de la bande passante de communication du réseau sans fil au moins pour la transmission de requêtes d'établissement de liaison satisfaisant à un ou plusieurs critères de priorité choisis,
- des moyens de traitement chargés de déterminer si une requête d'établissement de liaison avec le réseau distant, satisfait à chaque critère de priorité choisi, et dans l'affirmative d'associer à cette requête une autorisation d'utilisation de la portion de bande passante réservée, et
- des moyens de gestion chargés, lorsqu'ils reçoivent une requête associée à une autorisation d'utilisation, de déterminer les ressources nécessaires à l'établissement de la liaison requise, et si ces ressources nécessaires sont encore disponibles au sein du réseau, afin, dans l'affirmative, d'allouer à l'établissement de la liaison les ressources nécessaires déterminées.

Selon une autre caractéristique de l'invention, lorsque les ressources disponibles au sein du réseau sont inférieures aux ressources nécessaires à l'établissement de la liaison, les moyens de gestion sont chargés d'effectuer auprès du serveur d'appels une demande de réallocation, pour l'établissement de la liaison requise, des ressources qui sont utilisées par une liaison en cours présentant une priorité inférieure.

Le critère de priorité porte par exemple sur l'origine de la requête ou sur le type de la liaison requise. Lorsque le critère de priorité porte sur l'origine de la requête, celle-ci peut consister, par exemple, en l'adresse réseau du terminal de communication sans fil qui a émis la requête et/ou le type du terminal de communication sans fil qui a émis la requête et/ou le type de service impliqué par la liaison requise et/ou le type d'application impliquée par la liaison requise et/ou l'identifiant de l'utilisateur qui requiert la liaison et/ou le code d'authentification de l'utilisateur requérant la liaison.

Par ailleurs, le réseau peut comprendre des moyens de mémorisation stockant des listes de paramètres de priorité. Dans ce cas, les moyens de traitement sont agencés pour accéder aux moyens de mémorisation afin de comparer leurs listes de paramètres de priorité à des paramètres associés à la requête, puis de déterminer si cette requête satisfait à chaque critère de priorité choisi.

Préférentiellement, les moyens de traitement sont implantés dans les terminaux de communication sans fil qui génèrent et transmettent les requêtes à un point d'accès au réseau. Dans ce cas, les moyens de mémorisation sont avantageusement réalisés sous la forme de mémoires qui sont implantées dans les terminaux de communication sans fil.

Egalement de préférence, les moyens de gestion et/ou les moyens de réservation sont implantés dans l'un au moins des points d'accès au réseau.

L'invention est particulièrement bien adaptée, bien que de façon non exclusive, aux réseaux sans fil agencés sous la forme de réseaux locaux (ou WLAN pour « Wireless Local Area Network ») supportés par exemple par les technologies standardisées 802.11x, mais elle peut également s'appliquer à des réseaux de radiocommunication publics basés sur les normes GSM ou UMTS, par exemple.

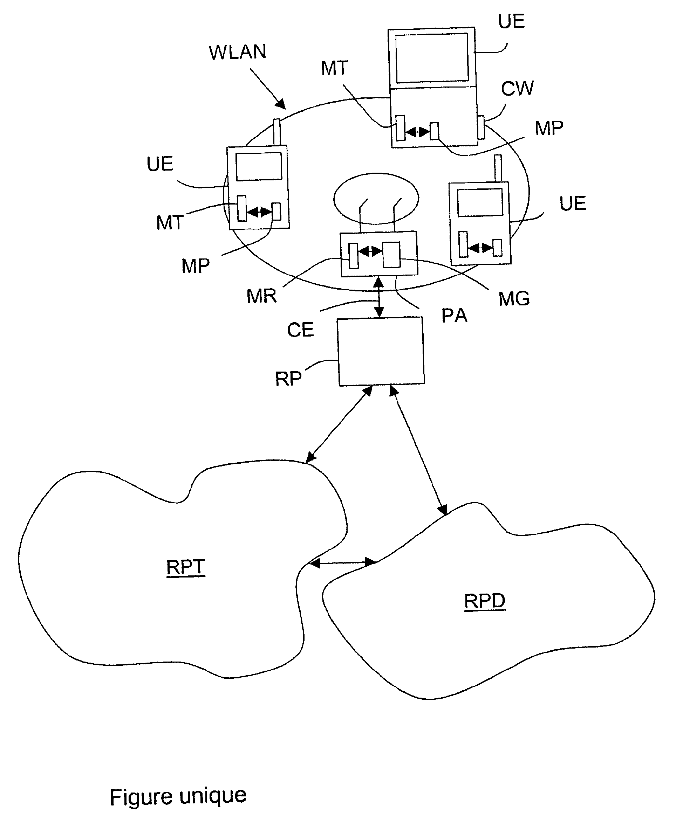

D'autres caractéristiques et avantages de l'invention apparaîtront à l'examen de la description détaillée ci-après, et du dessin annexé, sur lequel l'unique figure illustre de façon schématique un exemple d'installation de communications comprenant un réseau local sans fil équipé d'un point d'accès selon l'invention et de terminaux de communications selon l'invention. Le dessin annexé pourra non seulement servir à compléter l'invention, mais aussi contribuer à sa définition, le cas échéant.

L'invention a pour objet de permettre la transmission de requêtes d'établissement de liaison montante (ou « uplink ») à caractère(s) prioritaire(s) dans les réseaux de communications sans fil.

L'installation de communications illustrée sur l'unique figure, à titre d'exemple, comporte un réseau de communications sans fil WLAN, appartenant par exemple à un groupe d'entreprises, un réseau public de téléphonie RPT, appartenant à un opérateur de téléphonie, éventuellement mobile, et un réseau public de données RPD.

Le réseau sans fil WLAN est ici un réseau local sans fil (ou « Wireless Local Area Network ») comportant un ou plusieurs points d'accès PA, raccordés à un routeur périphérique (ou « edge router ») RP, lui-même raccordé au réseau public de téléphonie RPT et au réseau public de données RPD et assurant la fonction de serveur d'appels. L'invention peut toutefois s'appliquer à des réseaux cellulaires de type GSM pour les appels d'urgence à l'aide d'un numéro dédié, tel que le n°112 ou le n°911, par exemple.

Comme indiqué ci-dessus, le réseau sans fil est ici de type WLAN, mais, dans des variantes il pourrait être de type Bluetooth ou UWB (pour « Ultra Wide Band »). Par ailleurs, le réseau public de téléphonie RPT est par exemple de type commuté (ou RTC pour « Réseau Téléphonique Commuté », ou encore PSTN pour « Public Switched Telephony Network »), mais il pourrait s'agir d'un réseau public de type PLMN (pour « Public Land Mobile Network »), comme par exemple les réseaux GSM, GSM/GPRS et UMTS. En outre, le réseau public de données RPD est par exemple un réseau à protocole Internet (IP).

Bien entendu, l'invention n'est pas limitée à ces seuls types de réseaux, ni au nombre de réseaux choisi. On pourrait ainsi faire coexister un ou plusieurs réseaux locaux avec un ou plusieurs réseaux publics ou privés de téléphonie RPT et/ou avec un ou plusieurs réseaux publics ou privés de données RPD.

Le routeur périphérique RP assure préférentiellement la fonction de serveur d'appels (ou « call server »), c'est-à-dire qu'il est chargé d'établir les liaisons entre des terminaux de communication sans fil UE, qui sont situés dans la zone de couverture du réseau WLAN et qui de ce fait sont susceptibles de se raccorder par voie d'onde à ses points d'accès PA, et les réseaux publics de téléphonie RPT et de données RPD. Dans ce qui suit, on assimilera le routeur périphérique RP à son serveur d'appels. En variante, le serveur d'accès pourrait être implanté dans l'un des points d'accès PA du réseau WLAN, ce qui pourrait être le cas si le point d'accès PA contenait en plus un accès ADSL, par exemple.

Dans l'exemple illustré, le point d'accès PA est raccordé au routeur périphérique RP par un câble CE, de préférence de type Ethernet. Mais, en variante, le raccordement pourrait s'effectuer par voie d'ondes, par exemple par un lien radio de type 802.11 b.

On entend ici par « terminal de communication sans fil UE » (ci-après terminal UE), tout équipement de communication équipé d'une carte WLAN CW, amovible ou intégrée, capable, ici, d'accéder aux réseaux RPT et/ou RPD via le réseau WLAN lorsqu'il se trouve placé dans la zone de couverture dudit réseau WLAN. Par conséquent, un terminal UE est par exemple un téléphone mobile, un micro-ordinateur portable (ou mobile), ou un assistant numérique personnel (ou PDA).

Lorsqu'un terminal UE se trouve placé dans la zone de couverture du réseau local sans fil WLAN et qu'il souhaite établir une liaison montante (ou uplink) avec un réseau distant RPT ou RPD de l'installation, il doit générer puis transmettre au point d'accès PA une requête d'établissement de liaison. Cette requête se présente généralement sous la forme d'une trame de données comportant dans son entête l'adresse MAC (pour « Medium Access Control » - niveau 2 du modèle OSI) du terminal UE. Le point d'accès PA transmet ensuite au serveur d'appels RP la requête afin qu'il détermine si la bande passante de communication du réseau WLAN, disponible, est suffisante pour permettre l'établissement de la liaison montante requise. Dans l'affirmative, la fraction de bande passante nécessaire à la liaison est allouée au terminal UE requérant, tandis que dans la négative le serveur d'appels RP transmet au terminal UE, via le point d'accès PA, un message signalant la saturation des ressources.

Dans un réseau sans fil selon l'invention on procède différemment. En effet, le réseau WLAN comprend tout d'abord un module de réservation MR chargé de réserver une portion de sa bande passante de communication pour la transmission de requêtes d'établissement de liaison satisfaisant à un ou plusieurs critères de priorité choisis. En d'autres termes, une partie de la bande passante du réseau WLAN est réservée exclusivement à l'interprétation, ou à l'acheminement en vue d'une interprétation, de requêtes d'établissement de liaison montante à caractère(s) prioritaire(s).

Tout type de caractère prioritaire peut être envisagé afin de définir des utilisateurs « privilégiés » (ou prioritaires). Mais, d'une manière générale, le caractère prioritaire vise plus particulièrement les services de sécurité et les services gouvernementaux.

Chaque critère de priorité peut ainsi porter sur l'origine de la requête ou sur le type de la liaison requise. Par exemple, l'origine de la requête peut consister en l'adresse réseau (MAC) du terminal UE qui l'a émise et/ou le type du terminal UE qui l'a émise et/ou le type de service impliqué par la liaison requise et/ou le type d'application impliqué par la liaison requise et/ou l'identifiant de l'utilisateur qui requiert la liaison et/ou le code d'authentification de l'utilisateur requérant la liaison. Le type de la liaison requise peut être par exemple défini par un numéro d'appel dédié utilisé pour générer la requête, tel que le numéro 911 ou le numéro 112, ou par exemple par une adresse URL dédiée de type « www.police.org » dans le cas d'accès au service via Internet.

La taille de la portion de bande passante réservée peut être choisie en fonction des besoins. Mais, afin de ne pas trop gêner les utilisateurs non prioritaires du réseau WLAN, il est préférable qu'elle représente quelques pourcents, typiquement 5%, de sa bande passante de communication.

Le module de réservation MR est préférentiellement implanté dans chaque point d'accès PA du réseau WLAN, mais il pourrait également être implanté uniquement dans certains points d'accès PA d'un réseau assurant une couverture englobant d'autres cellules de tailles plus modestes. Ce type de points d'accès permet l'établissement de cellules dites « Parapluie ».

Le réseau WLAN selon l'invention comporte également des moyens de traitement chargés de déterminer si une requête, d'établissement de liaison avec l'un des réseaux distants RPT et RPD de l'installation, satisfait à chaque critère de priorité choisi. Préférentiellement, les moyens de traitement sont agencés sous la forme de modules de traitement MT implantés dans les terminaux UE qui peuvent se connecter au réseau WLAN.

Ainsi, lorsqu'un utilisateur signale à son terminal UE qu'il veut établir une liaison choisie, il lui communique le numéro d'appel dédié ou l'identifiant du terminal qu'il souhaite joindre, comme par exemple son numéro de téléphone ou son adresse internet, ainsi qu'éventuellement le type de service requis et/ou le type d'application requis et/ou son identifiant d'utilisateur et/ou son code d'authentification. En fait, toute information (ou tout paramètre) pouvant définir une priorité peut être communiqué(e). Bien entendu, le terminal UE peut stocker dans sa mémoire certaines des informations de priorité de sorte que l'utilisateur n'ait pas à les fournir.

Une fois que le module de traitement MT est en possession des informations (ou paramètres) de priorité, il détermine si l'utilisateur est autorisé à établir la liaison prioritaire requise.

Pour ce faire, il est avantageux de prévoir des moyens de mémorisation stockant une ou plusieurs listes de paramètres (ou informations) de priorité. Ces moyens de mémorisation sont par exemple réalisés sous la forme de mémoires de paramètres MP implantées dans les terminaux UE équipés d'un module de traitement MT.

Ainsi, chaque module de traitement MT peut accéder à la mémoire MP associée afin de comparer la ou les listes de paramètres de priorité qu'elle stocke au(x) paramètre(s) de priorité associé(s) à la requête, et déterminer si cette requête satisfait à chaque critère de priorité choisi.

Si la requête ne satisfait pas au(x) critère(s) de priorité, le module de traitement MT ne lui associe pas d'autorisation et la procédure de transmission de la requête d'établissement de liaison se déroule classiquement, comme indiqué précédemment, c'est-à-dire sans priorité ou avec un niveau de priorité inférieur à celui offert par le service objet de l'invention.

Si la requête satisfait au(x) critère(s) de priorité, le module de traitement MT lui associe une autorisation d'utilisation de la portion réservée de bande passante, puis le terminal UE transmet sa requête et l'autorisation associée au point d'accès PA.

Afin de gérer les autorisations d'utilisation de la portion réservée, associées aux requêtes, le réseau WLAN selon l'invention comporte un module de gestion MG. Ce dernier est plus précisément chargé, lorsqu'il reçoit une requête associée à une autorisation d'utilisation, de déterminer les ressources (et notamment la bande passante) nécessaires à l'établissement de la liaison objet de la requête.

Le module de gestion MG est préférentiellement implanté dans le point d'accès PA, mais il peut également être implanté dans un équipement dit « Wireless Switch » capable de gérer les liaisons entre différents points d'accès et les fonctionnalités par exemple de type « handover ». Un tel Wireless Switch peut également gérer des liaisons de type LAN. Quel que soit l'endroit d'implantation du module de gestion MG, il est raccordé au serveur d'appels RP pour effectuer auprès de lui des demandes d'allocation de ressources nécessaires à l'établissement des liaisons montantes entre son réseau WLAN et les réseaux distants RPT et RPD.

Si les ressources nécessaires à l'établissement de la liaison requise sont encore disponibles, le module de gestion MG autorise l'établissement de la liaison et lui alloue la quantité de ressources nécessaires qu'il vient de déterminer, puis la requête est transmise au serveur d'appels RP.

Si les ressources nécessaires à l'établissement de la liaison requise sont indisponibles, le module de gestion MG transmet au serveur d'appels RP une demande de réallocation des ressources utilisées par une liaison en cours, au profit de la liaison requise à caractère(s) prioritaire(s). Plus précisément, le module de gestion MG demande au serveur d'appels RP s'il est possible d'interrompre l'une au moins des liaisons établies, associées à des priorités inférieures à celles de la liaison requise.

Le module de gestion MG dispose préférentiellement des listes de paramètres de priorité, servant aux comparaisons, et des niveaux de priorité associés.

Si le serveur d'appels RP autorise l'interruption de liaison, le module de gestion MG alloue à l'établissement de la requête des ressources correspondant à celles nécessaires, qu'il a précédemment déterminées, puis la requête est transmise au serveur d'appels RP. Dans le cas contraire, le module de gestion MG transmet au terminal UE, via le point d'accès PA, un message signalant la saturation des ressources.

Les modules de traitement MT, le module de gestion MG, le module de réservation MR, ainsi qu'éventuellement les mémoires de paramètres MP, peuvent être réalisés sous la forme de circuits électroniques, de modules logiciels (ou informatiques), ou d'une combinaison de circuits et de logiciels.

L'invention ne se limite pas aux modes de réalisation de réseau de communications sans fil, terminal de communication sans fil et point d'accès au réseau décrits ci-avant, seulement à titre d'exemple, mais elle englobe toutes les variantes que pourra envisager l'homme de l'art dans le cadre des revendications ci-après.

Ainsi, dans ce qui précède il a été décrit une application de l'invention aux réseaux locaux sans fil de type WLAN. Mais, l'invention peut également s'appliquer à des réseaux cellulaires de type GSM dans le cas de l'utilisation de numéros d'appel d'urgence, comme par exemple le n°112 ou le n°911.

Par ailleurs, l'invention concerne également la réservation de moyens nécessaires à l'établissement de façon vocale du service de gestion d'appel à carcatère(s) prioritaire(s), c'est-à-dire par appel du service en mode de reconnaissance vocale. Les moyens permettant l'établissement du service par reconnaissance vocale sont alors implantés dans un serveur attaché au serveur d'appels. De tels moyens peuvent utiliser, pour les traitements propres à l'invention, des protocoles de type XML ou VXML, par exemple. Dans ce cas, l'établissement du service propre à l'invention nécessite plus que la simple réservation de bande passante permettant, dans un réseau WLAN, d'acheminer et d'interpréter, une demande d'accès prioritaire. Il nécessite en effet la possibilité d'établir à tout moment un canal de parole vers le serveur de reconnaissance vocale avant de décider du caractère prioritaire de la demande d'établissement de liaison.

## Revendications

1. Réseau de communications sans fil (WLAN) comprenant au moins un point d'accès (PA) couplé à un serveur d'appels (RP) raccordé à au moins un réseau de communications distant (RPT, RPD), **caractérisé en ce qu'**il comprend des moyens de réservation (MR) propres à réserver une portion d'une bande passante de communication dudit réseau sans fil (WLAN) au moins pour la transmission de requêtes d'établissement de liaison avec ledit réseau distant (RPT, RPD), satisfaisant à au moins un critère de priorité choisi, des moyens de traitement (MT) propres à déterminer si une requête d'établissement de liaison satisfait à chaque critère de priorité choisi, et dans l'affirmative à associer à ladite requête une autorisation d'utilisation de ladite portion réservée, et des moyens de gestion (MG) propres, à réception d'une requête associée à une autorisation d'utilisation, à déterminer les ressources nécessaires à l'établissement de la liaison requise, et si lesdites ressources nécessaires sont disponibles au sein dudit réseau, et dans l'affirmative d'allouer les ressources nécessaires déterminées à l'établissement de ladite liaison requise.

2. Réseau selon la revendication 1, **caractérisé en ce que** lesdits moyens de gestion (MG) sont agencés, lorsque lesdites ressources nécessaires à l'établissement de la liaison requise ne sont pas disponibles, pour effectuer auprès dudit serveur d'appels (RP) une demande de réallocation de ressources utilisées pour une liaison en cours présentant une priorité inférieure à ladite requête, pour l'établissement de ladite liaison requise.

3. Réseau selon l'une des revendications 1 et 2, **caractérisé en ce que** ledit critère de priorité est choisi dans un groupe comprenant au moins une origine de requête et un type de liaison.

4. Réseau selon la revendication 3, **caractérisé en ce que** ladite origine de requête consiste en l'adresse réseau du terminal de communication sans fil (UE) ayant émis la requête et/ou le type du terminal de communication sans fil (UE) ayant émis la requête et/ou le type de service impliqué par la liaison requise et/ou le type d'application impliquée par la liaison requise et/ou l'identifiant de l'utilisateur requérant la liaison et/ou le code d'authentification de l'utilisateur requérant la liaison.

5. Réseau selon l'une des revendications 1 à 4, **caractérisé en ce qu'**il comprend des moyens de mémorisation (MP) stockant des listes de paramètres de priorité, et **en ce que** lesdits moyens de traitement (MT) sont agencés pour accéder auxdits moyens de mémorisation (MP) de manière à comparer les listes de paramètres de priorité qu'ils stockent à des paramètres associés à ladite requête et à déterminer si cette requête satisfait à chaque critère de priorité choisi.

6. Réseau selon l'une des revendications 1 à 5, **caractérisé en ce que** lesdits moyens de traitement (MT) sont implantés dans des terminaux de communication sans fil (UE) agencés pour générer et transmettre lesdites requêtes à un point d'accès au réseau (PA).

7. Réseau selon la combinaison des revendications 5 et 6, **caractérisé en ce que** lesdits moyens de mémorisation (MP) sont agencés sous la forme de mémoires implantées dans lesdits terminaux de communication sans fil (UE).

8. Réseau selon l'une des revendications 1 à 7, **caractérisé en ce que** lesdits moyens de gestion (MG) et/ou lesdits moyens de réservation (MR) sont implantés dans un point d'accès audit réseau (PA).

9. Réseau selon la revendication 8, **caractérisé en ce que** ledit point d'accès au réseau (PA) assure une couverture englobant plusieurs cellules de petites tailles.

10. Réseau selon l'une des revendications 1 à 9, **caractérisé en ce qu'**il constitue un réseau local sans fil.

11. Point d'accès (PA) à un réseau de communications sans fil (WLAN), **caractérisé en ce qu'**il comprend des moyens de réservation (MR) et des moyens de gestion (MG) selon l'une des revendications précédentes.

12. Terminal de communication sans fil (UE) pour un réseau de communications sans fil (WLAN), **caractérisé en ce qu'**il comprend des moyens de traitement (MT) et des moyens de mémorisation (MP) selon l'une des revendications 1 à 10.

## Claims

1. A wireless communications network (WLAN) comprising at least one access point (AP) coupled to a call server (ER) that is connected to at least one remote communications network (PTN, PDN), **characterized in that** it comprises reservation means (MR) used to reserve a portion of communication bandwidth on said wireless network (WLAN) for at least the transmission of the requests to establish a link with said remote network (PTN, PDN), if they meet at least one selected priority criterion, processing means (PM) used to determine whether a link establishment request meets every selected criterion, and if so, to associate said request with an authorization to use said reserved portion, and management means (MM) that are used, once they receive a request associate with a usage authorization, to determine the resources needed for establishing the requested link and if said needed resources are available within said network, and if so, to allocate the determined necessary resources to the establishment of said requested link.

2. A network as set forth in claim 1, wherein said management means (MM) are configured, whenever said resources needed to establish the requested link are unavailable, to request said call server (ER) to reallocate the resources used for a current link with a priority lower than said request, so as to establish said requested link.

3. A network as set forth in claims 1 and 2, wherein said priority criterion in selected from a group comprising at least one origin of request and one type of link.

4. A network as set forth in claim 3, wherein said origin of request comprises the network address of the wireless communication terminal (UE) that issued the request and/or the type of wireless communication terminal (UE) that issued the request and/or the service concerned by the requested link and/or the identifier of the user requesting the link and/or the authentication code of the user requesting the link.

5. A network as set forth in one of the claims from 1 to 4, further comprising memory means (MP) for storing the lists of priority parameters, wherein said processing means (PM) are configured to access said memory means (MP) so as to compare the lists of stored priority parameters with the parameters associated with said request, and to determine if said request meets each priority criterion selected.

6. A network as set forth in one of the claims from 1 to 5, wherein said processing means (PM) are installed in the wireless communication terminals (UE) configured to generate and transmit said requests to an network access point (AP).

7. A network as set forth in the combination of claims 5 and 6, wherein said memory means (MP) comprise memories installed in said wireless communication terminals (UE).

8. A network as set forth in one of the claims from 1 to 7, wherein at least one of said management means (MM) and said means of reservation (MR) is installed in an access point (AP) in said network.

9. A network as set forth in claim 8, wherein said network access point (AP) ensures coverage that encompasses several small-sized cells.

10. A network as set forth in one of the claims from 1 to 9, wherein said network constitutes a wireless local area network.

11. An access point (AP) for a wireless local area network (WLAN), comprising reservation means (MR) and management means (MM) as set forth in one of the preceding claims.

12. Wireless communication terminal (UE) for a wireless communication network, comprising processing means (PM) and memory means (MP) as set forth in one of the claims from 1 to 10.

## Patentansprüche

1. Drahtloses Netzwerk (WLAN) mit mindestens einem Zugangspunkt (PA), der an einen Anrufserver (RP) gekoppelt ist, welcher an mindestens ein entferntes Netzwerk (RPT, RPD) angeschlossen ist, **dadurch gekennzeichnet, dass** es Mittel zur Reservierung (MR) einschließt, die geeignet sind, einen Teil eines Durchlassbereichs dieses drahtlosen Netzwerks (WLAN) zumindest für die Übertragung von Anforderungen betreffend den Aufbau einer Verbindung mit diesem entfernten Netz (RPT, RPD) zu reservieren, wobei mindestens einem gewählten Prioritätskriterium entsprochen wird, Mittel zur Verarbeitung (MT), die geeignet sind zu ermitteln, ob eine Anforderung in Sachen Verbindungsaufbau jedem gewählten Prioritätskriterium genügt und falls ja, mit dieser Anforderung eine Berechtigung zur Nutzung dieses reservierten Teils zu verknüpfen, und Mittel zur Verwaltung (MG), die geeignet sind, beim Empfang einer mit einer Nutzungsberechtigung verknüpften Anforderung die Ressourcen zu bestimmen, die für den Aufbau der angeforderten Verbindung erforderlich sind, und ob diese erforderlichen Ressourcen in diesem Netzwerk verfügbar sind, und falls ja, die ermittelten erforderlichen Ressourcen dem Aufbau dieser angeforderten Verbindung zuzuweisen.

2. Netzwerk gemäß Anspruch 1, **dadurch gekennzeichnet, dass** diese Mittel zur Verwaltung (MG) so aufgebaut sind, dass sie, wenn diese für den Aufbau der angeforderten Verbindung erforderlichen Ressourcen nicht verfügbar sind, bei diesem Anrufserver (RP) eine Anforderung vornimmt betreffend Neuzuteilung von Ressourcen, die für eine aktuelle Verbindung verwendet werden, welche eine niedrigere Priorität hat als diese Anforderung zwecks Aufbau dieser angeforderten Verbindung.

3. Netzwerk gemäß einem der Ansprüche 1 und 2, **dadurch gekennzeichnet, dass** dieses Prioritätskriterium aus einer Gruppe ausgewählt wird, die mindestens einen Anforderungsursprung und eine Verbindungsart einschließt.

4. Netzwerk gemäß Anspruch 3, **dadurch gekennzeichnet, dass** dieser Anforderungsursprung aus der Netzwerkadresse des drahtlosen Kommunikationsendgeräts (UE) besteht, das die Anforderung gesendet hat, und/oder dem Typ des drahtlosen Kommunikationsendgeräts (UE), das die Anforderung gesendet hat, und/oder der Dienstart, die durch die angeforderte Verbindung impliziert ist, und/oder der Art der Anwendung, die durch die angeforderte Verbindung impliziert ist, und/oder der Kennung des Nutzers, der die Verbindung anfordert, und/oder dem Authentisierungscode des Nutzers, der die Verbindung anfordert.

5. Netzwerk gemäß einem der Ansprüche 1 bis 4, **dadurch gekennzeichnet, dass** es Mittel zur Speicherung (MP) einschließt, die Listen mit Prioritätsparametern speichern, und **dadurch gekennzeichnet, dass** diese Mittel zur Verarbeitung (MT) so aufgebaut sind, dass sie auf diese Mittel zur Speicherung (MP) zugreifen, um die von ihnen gespeicherten Listen mit Prioritätsparametern mit Parametern zu vergleichen, die mit dieser Anforderung verknüpft sind, und zu ermitteln, ob diese Anforderung jedem gewählten Prioritätskriterium entspricht.

6. Netzwerk gemäß einem der Ansprüche 1 bis 5, **dadurch gekennzeichnet, dass** diese Mittel zur Verarbeitung (MT) in drahtlosen Kommunikationsendgeräten (UE) angesiedelt sind, welche so aufgebaut sind, dass sie diese Anforderungen generieren und an einen Netzzugangspunkt (PA) übermitteln.

7. Netzwerk gemäß der Kombination von Anspruch 5 und 6, **dadurch gekennzeichnet, dass** diese Mittel zur Speicherung (MP) in Form von Speichern aufgebaut sind, die in diesen drahtlosen Kommunikationsendgeräten (UE) angesiedelt sind.

8. Netzwerk gemäß einem der Ansprüche 1 bis 7, **dadurch gekennzeichnet, dass** diese Mittel zur Verwaltung (MG) und/oder diese Mittel zur Reservierung (MR) in einem Zugangspunkt zu diesem Netzwerk (PA) angesiedelt sind.

9. Netzwerk gemäß Anspruch 8, **dadurch gekennzeichnet, dass** dieser Netzzugangspunkt (PA) eine Versorgung sicherstellt, die mehrere kleine Zellen einschließt.

10. Netzwerk gemäß einem der Ansprüche 1 bis 9, **dadurch gekennzeichnet, dass** es ein drahtloses lokales Netz bildet.

11. Zugang (PA) zu einem drahtlosen Netzwerk (WLAN), **dadurch gekennzeichnet, dass** er Mittel zur Reservierung (MR) und Mittel zur Verwaltung (MG) gemäß einem der vorstehenden Ansprüche einschließt.

12. Drahtloses Kommunikationsendgerät (UE) für ein drahtloses Netzwerk (WLAN), **dadurch gekennzeichnet, dass** es Mittel zur Verarbeitung (MT) und Mittel zur Speicherung (MP) gemäß einem der Ansprüche 1 bis 10 einschließt.
